(19) Europäisches Patentamt
European Patent Office
Office européen des brevets

(11) **EP 4 521 044 A1**

(12) **EUROPEAN PATENT APPLICATION**
published in accordance with Art. 153(4) EPC

(43) Date of publication:
**12.03.2025 Bulletin 2025/11**

(21) Application number: **23834451.9**

(22) Date of filing: **14.04.2023**

(51) International Patent Classification (IPC):
**F25D 29/00** (2006.01)

(52) Cooperative Patent Classification (CPC):
Y02B 30/70

(86) International application number:
**PCT/CN2023/088294**

(87) International publication number:
**WO 2024/007669 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.07.2022 CN 202210835807**

(71) Applicant: **Gree Electric Appliances, Inc. of
Zhuhai**
Zhuhai, Guangdong 519070 (CN)

(72) Inventors:
• **ZHOU, Huifang**
  **Zhuhai, Guangdong 519070 (CN)**
• **CHENG, Qi**
  **Zhuhai, Guangdong 519070 (CN)**
• **ZHOU, Jin**
  **Zhuhai, Guangdong 519070 (CN)**

(74) Representative: **Appleyard Lees IP LLP
15 Clare Road
Halifax HX1 2HY (GB)**

(54) **METHOD AND APPARATUS FOR CONTROLLING MULTI-MODULE WATER CHILLING UNIT**

(57)   A method and apparatus for controlling a multi-module water chilling unit. The multi-module water chilling unit comprises at least two modules, wherein each module is provided with a chilled-water inlet and a corresponding chilled-water outlet, each module is provided with a compressor, and chilled-water outlets of the modules converge at a main pipe by means of the corresponding compressors. The method comprises: acquiring the difference between an actual water output temperature of a main pipe and a target water output temperature; acquiring the current operation state of a compressor of each module; determining a target control strategy for each module according to the difference and the current operation state; and controlling the operation of each module according to the target control strategy. In this way, the problem in the related art of the service life of a unit being shortened due to modules being in a load imbalance state for a long time is solved.

```
┌─────────────────────────────────────────────┐
│ Obtaining a difference between an actual      │
│ outlet water temperature and a target outlet  ╮
│ water temperature at the main pipe            │  S102
└─────────────────────────────────────────────┘
                      │
                      ▼
┌─────────────────────────────────────────────┐
│ Obtaining current operating states of the     ╮
│ compressors of the modules                    │  S104
└─────────────────────────────────────────────┘
                      │
                      ▼
┌─────────────────────────────────────────────┐
│ Determining a target control strategy for     │
│ the modules according to the difference and   ╮
│ the current operating states                  │  S106
└─────────────────────────────────────────────┘
                      │
                      ▼
┌─────────────────────────────────────────────┐
│ Controlling the modules to operate according  ╮
│ to the target control strategy                │  S108
└─────────────────────────────────────────────┘
```

FIG. 1

EP 4 521 044 A1

## Description

CROSS-REFERENCE TO RELATED APPLICATION

The present application is based on a Chinese patent application No. 202210835807.1, with a filling date of July 8, 2022, and claims the priority of the Chinese patent application, which is incorporated herein by reference in its entirety.

TECHNICAL FIELD

The present disclosure relates to the technology field of water chilling unit, and in particular to a method and an apparatus for controlling a multi-module water chilling unit.

BACKGROUND

In a multi-module chilling unit, loads are distributed by directly distributing the total cooling capacity equally to each module, which may cause each compressor to be in an ON state, thus shortening the service life of the compressor, and may cause each compressor to be in a low-load operating state, thus reducing the system performance. Also, when the compressors used in different modules are different, the rated cooling capacities of the chilling unit are different, and the operating loads of the modules may vary greatly, which may cause some compressors to operate at relatively high loads for a long time and cause some compressors to operate at relatively low loads for a long time, thus causing each module to be in an uneven load state for a long time and shortening the service life of the chilling unit.

SUMMARY

According to one aspect of the present disclosure, a method of controlling a multi-module water chilling unit is provided. The multi-module water chilling unit includes at least two modules, each module is provided with a chilled- water inlet and a corresponding chilled-water outlet; each is provided with a compressor; and chilled water output from each module is converged in a main pipe through a corresponding compressor, wherein the method includes: obtaining a difference between an actual outlet water temperature and a target outlet water temperature of the main pipe; obtaining current operating states of the compressors of the modules; determining a target control strategy for the modules according to the difference and the current operating states; and controlling the modules to operate according to the target control strategy.

In some embodiments, obtaining the current operating states of the compressors of the modules includes: obtaining starting states of the compressors of the modules. Determining the target control strategy for the modules according to the difference and the current operating states includes: determining the number of un-started compressors according to the tarting states; and determining the target control strategy for the modules according to the difference and the number of the un-started.

In some embodiments, determining the target control strategy for the modules according to the difference and the current operating states includes: when the difference is less than a first temperature threshold and the number of the un-started compressors is greater than 0, obtaining an average value of loads of the compressors of the modules, and determining a first compressor that has a maximum load among loads greater than the average value, and reducing an operating frequency of the first compressor by a first target step, until a corresponding difference is greater than or equal to the first temperature threshold, or until the load of the first compressor is within a first load range, or until the first compressor has a minimum load among loads greater than the average value.

In some embodiments, the method further includes: when the corresponding difference is less than the first temperature threshold, and when the load of the first compressor is within the first load range, recalculating the average value of the loads of the compressors of the modules, and determining a second compressor that has a maximum load among loads greater than the recalculated average value and is among other compressors excluding the first compressor, and reducing an operating frequency of the second compressor by the first target step until the corresponding difference is greater than or equal to the first temperature threshold, or until the load of the second compressor is within the first load range, or until the second compressor has a minimum load among loads greater than the recalculated average value.

In some embodiments, the method further includes: when the second compressor among the compressors has a minimum load among loads greater than the recalculated average value, and when the corresponding difference is less than the first temperature threshold, determining a third compressor in the modules which has a minimum load among loads less than the average value, and shutting down the third compressor.

In some embodiments, the method further includes recalculating the average value of the loads of the modules, determining a fourth compressor that has a minimum load among loads less than the recalculated average value and is among other compressors excluding the third compressor, and increasing an operating frequency of the fourth compressor by the first target step until the corresponding difference is greater than or equal to the first temperature threshold.

In some embodiments, determining the target control strategy for the modules according to the difference and the current operating states includes: when the difference is less than a first temperature threshold and the number of un-started compressors is equal to 0, reducing frequencies of the compressors that have loads greater than the average value of the loads of the modules in a sequence from a large load to a small load, until

$$\frac{|X_{jmax}-X_{j\_ave}|}{X_{j\_ave}} - \frac{|X_{jmin}-X_{j\_ave}|}{X_{j\_ave}} \leq \psi_1$$

is satisfied, or until the last one of the compressors that have the loads greater than the average value is traversed; wherein, $X_{jmax}$ denotes the maximum load after a frequency reduction, $X_{j\_ave}$ denotes an average load after the frequency reduction, $X_{jmin}$ denotes the minimum load after frequency reduction, and $\psi_1$ denotes a first threshold.

In some embodiments, the method further includes: when the last one of the compressors that have the loads greater than the average value is traversed, and when the difference is less than the first temperature threshold, increasing frequencies of the compressors that have the loads lower than the average value of the loads of the modules by a second target step in a sequence from a small load to a large load, until

$$\frac{|X_{jmax}-X_{j\_ave}|}{X_{j\_ave}} - \frac{|X_{jmin}-X_{j\_ave}|}{X_{j\_ave}} \leq \psi_1$$

is satisfied.

In some embodiments, determining the target control strategy for the modules according to the difference and the current operating states includes: when the difference is greater than a second temperature threshold and the number of the un-started compressors is greater than 0, determining a fifth compressor having the minimum load, and increasing a frequency of the fifth compressor by a third target step, until $|X_{jmin} - X_{j\_ave}| < \varphi$ is satisfied; wherein, $X_{jmin}$ denotes the minimum load after a frequency increase, $X_{j\_ave}$ denotes an average load after the frequency increase, and $\varphi$ denotes a second threshold.

In some embodiments, the method further includes starting the un-started compressors when all compressors having the loads less than the average load satisfy $|X_{jmin} - X_{j\_ave}| < \varphi$ respectively.

In some embodiments, determining the target control strategy for the modules according to the difference and the current operating states includes: when the difference is greater than a second temperature threshold and the number of un-started compressors is equal to 0, reducing frequencies of compressors having loads lower than an average value of loads of the compressors once in a sequence from a small load to a large load, until the difference is less than or equal to the second temperature threshold.

In some embodiments, determining the target control strategy for the modules according to the difference and the current operating state includes: when the difference is greater than or equal to a first temperature threshold and less than or equal to a second temperature threshold, and when the number of the un-started compressors is greater than or equal to 0, reducing a frequency of one compressor corresponding to the maximum load by a fourth target step, and increasing a frequency of another compressor corresponding to the minimum load by a fifth target step, until

$$\frac{|X_{jmax}-X_{j\_ave}|}{X_{j\_ave}} - \frac{|X_{jmin}-X_{j\_ave}|}{X_{j\_ave}} \leq \psi_2$$

is satisfied; wherein, $X_{jmax}$ denotes the maximum load after a frequency adjustment, $X_{j\_ave}$ denotes an average load after the frequency adjustment, $X_{jmin}$ denotes the minimum load after the frequency adjustment, and $\psi_2$ denotes a third threshold.

According to a second aspect of the present disclosure, an apparatus for controlling a multi-module chilling unit is provided. The multi-module chilling unit includes at least two modules, each module is provided with a chilled-water inlet and a corresponding chilled-water outlet; each module is provided with a compressor; and chilled water output from each module is converged in a main pipe through a corresponding compressor. The apparatus includes: an obtaining unit for difference configured to obtain a difference of an actual outlet water temperature and a target outlet water temperature of the main pipe; an obtaining unit for current operating state configured to obtain current operating states of the compressors of the modules; a determining unit for targe control strategy configured to determine a target control strategy for the modules according to the difference and the current operating states; and an operation control unit configured to control the modules to operate according to the target control strategy.

In some embodiments, the obtaining unit for current operating state is further configured to obtain starting states of the compressors of the modules. Determining the target control strategy for the modules according to the difference and the current operating states includes: determining the number of un-started compressors according to the starting states, and determining the target control strategy for the modules according to the difference and the number of the un-started.

In some embodiments, the determining unit for targe control strategy is further configured to: when the difference is less than a first temperature threshold and the number of the un-started compressors is greater than 0, obtain an average value of loads of the compressors of the modules, determine a first compressor that has a maximum load among loads greater than the average value, and reduce an operating frequency of the first compressor by a first target step, until a corresponding difference is greater than or equal to the first temperature threshold, or until the load of the first compressor is within a first load range, or until the first compressor has a minimum load among loads greater than the average value.

In one of the embodiments, the apparatus is further configured to: when the load of the first compressor is within the first load range and when the corresponding difference is less than the first temperature threshold, recalculate the average value of the loads of the compressors of the modules, determine a second compressor that has a maximum load among loads greater than the recalculated average value and is among other compressors excluding the first compressor, and reduce an operating frequency of the second compressor by the first target step until the corresponding difference is greater than or equal to the first temperature threshold, or until the load of the second compressor is within the first load range, or until the second compressor has a minimum load among loads greater than the recalculated average value.

In some embodiments, the apparatus is further configured to: when the second compressor becomes a compressor among the compressors, which has a minimum load among loads greater than the recalculated average value, and when the corresponding difference is less than the first temperature threshold, determine a third compressor in the modules that has a minimum load among loads less than the average value, and turn off the third compressor.

In some embodiments, the apparatus is further configured to: recalculate the average value of the loads of the modules, and determine a fourth compressor that has a minimum load among loads less than the recalculated average value and is among other compressors excluding the third compressor, and increase an operating frequency of the fourth compressor by the first target step until the corresponding difference is greater than or equal to the first temperature threshold.

In some embodiments, the determining unit for targe control strategy is further configured to: when the difference is less than the first temperature threshold and the number of the un-started compressors is equal to 0, reduce frequencies of the compressors that have the loads greater than the average value of the loads of the modules in a sequence from a large load to a small load, until

$$\frac{|X_{jmax}-X_{j\_ave}|}{X_{j\_ave}} - \frac{|X_{jmin}-X_{j\_ave}|}{X_{j\_ave}} \leq \psi_1$$

is satisfied, or until the last one of the compressors that have the loads greater than the average value is traversed. Where, $X_{jmax}$ denotes the maximum load after frequency reduction, $X_{j\_ave}$ denotes an average load after the frequency reduction, $X_{jmin}$ denotes the minimum load after the frequency reduction, and $\psi_1$ denotes a first threshold.

In some embodiments, the apparatus is further configured to: when the last one of the compressors that have the loads greater than the average value is traversed, and when the difference is less than the first temperature threshold, increase frequencies of the compressors that have the loads lower than the average value of the loads of the modules by a second target step in a sequence from a small load to a large load, until

$$\frac{|X_{jmax}-X_{j\_ave}|}{X_{j\_ave}} - \frac{|X_{jmin}-X_{j\_ave}|}{X_{j\_ave}} \leq \psi_1$$

is satisfied.

In some embodiments, the determining unit for targe control strategy is further configured to: when the difference is greater than a second temperature threshold and the number of the un-started compressors is greater than 0, determine a fifth compressor that has the minimum load, and increase a frequency of the fifth compressor by a third target step, until $|X_{jmin} - X_{j\_ave}|$ is satisfied. Where, $X_{jmin}$ denotes the minimum load after the frequency increase, $X_{j\_ave}$ denotes an average load after the frequency increase, and $\varphi$ denotes a second threshold.

In some embodiments, the apparatus is further configured to start the un-started compressors when all compressors that have the loads less than the average load satisfy $|X_{jmin} - X_{j\_ave}| < \varphi$ respectively.

In some embodiments, the determining unit for targe control strategy is further configured to: when the difference is greater than the second temperature threshold and the number of un-started compressors is equal to 0, reduce frequencies of the compressors that have loads lower than the average value of the loads of the compressors once in a sequence from a small load to a large load, until the difference is less than or equal to the second temperature threshold.

In some embodiments, the determining unit for targe control strategy is further configured to: when the difference is greater than or equal to the first temperature threshold and less than or equal to the second temperature threshold, and when the number of the un-started compressors is greater than or equal to 0, reduce a frequency of one compressor corresponding to the maximum load by a fourth target step, and increase a frequency of another compressor corresponding to the minimum load by a fifth target step, until

$$\frac{|X_{jmax}-X_{j\_ave}|}{X_{j\_ave}} - \frac{|X_{jmin}-X_{j\_ave}|}{X_{j\_ave}} \leq \psi_2$$

is satisfied. Where, $X_{jmax}$ denotes the maximum load after the frequency adjustment, $X_{j\_ave}$ denotes the average load after the frequency adjustment, and $X_{jmin}$ denotes the minimum load after the frequency adjustment, and $\psi_2$ denotes a third threshold.

According to another aspect of the present invention, a computer-readable storage medium is provided and has a computer program stored thereon. The computer program, when executed by a processor, forces the processor to perform steps of the method of any one of the above embodiments.

BRIEF DESCRIPTION OF THE DRAWINGS

FIG. 1 is a schematic view showing a method for controlling a multi-module chilling unit according to an embodiment of the present disclosure;
FIG. 2 is a schematic view showing a principle of a single-module chiller system according to an embodiment of the present disclosure;
FIG. 3 is a schematic view showing a chilled-water cycle of the multi-module chilling unit according to an embodiment of the present disclosure;

FIG. 4 is a schematic view showing an apparatus for controlling a multi-module chilling unit according to an embodiment of the present disclosure.

DETAILED DESCRIPTION OF THE EMBODIMENTS

In order to make the objectives, technical solutions and advantages of the present application clearer and to be better understood, the present disclosure is further described in detail in conjunction with the accompanying drawings and embodiments. It should be understood that the specific embodiments described herein are only used to explain the present application but are not intended to limit the present application.

The purpose of the present disclosure is to overcome the above technical deficiencies and provide a method and an apparatus for controlling a multi-module chilling unit to solve the technical problem in the related art that a service life of the unit is shortened due to each module being in an uneven load state for a long time.

In order to achieve the above technical objectives, the present disclosure adopts the following technical solutions.

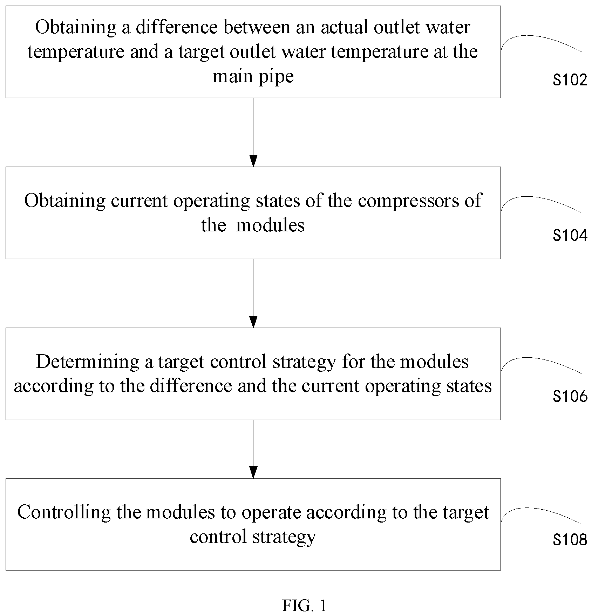

According to an embodiment of the present disclosure, a method for controlling a multi-module chilling unit is provided. Referring to FIG. 1, the method is implemented by a terminal (such as a multi-module chilling unit) or a server (such as a server associated with the multi-module chilling unit). The multi-module chilling unit includes at least two modules, each of the modules is provided with a chilled-water inlet and a corresponding chilled-water outlet, and each of the modules is provided with a compressor, and chilled water output from each module is converged in a main pipe through a corresponding compressor. The method includes:

Step S102, obtaining a difference between an actual outlet water temperature and a target outlet water temperature of the main pipe;
Step S104, obtaining current operating states of the compressors of the modules;
Step S106, determining a target control strategy for the modules according to the difference and the current operating states; and
Step S108, controlling the modules to operate according to the target control strategy.

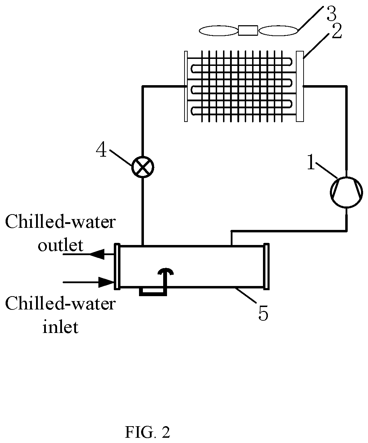

Referring to FIG. 2, a schematic view showing a principle of a single-module chiller system is provided. As shown in FIG. 2, the single-module chiller system includes: a frequency-variable compressor 1, an air-cooled condenser 2, a fan 3, a throttle valve 4, and a shell-and-tube-typed evaporator 5. The multi-module chilling unit includes at least two single-module chiller systems.

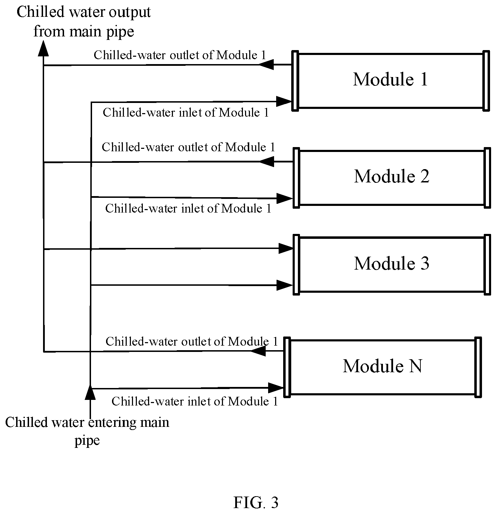

Referring to FIG. 3, a schematic view showing a chilled-water cycle of the multi-module chilling unit is provided. As shown in FIG. 3, the chilled water of a multi-module chilling unit is recycled, a control target of the outlet chilled-water temperature of each module is fixed and may be set, for example, to be 7°C, and the water output from the branch pipes is converged in the main water outlet pipe, so that an outlet water temperature thereof is the same as outlet water temperatures of the branch pipes.

In the method of controlling a multi-module chilling unit according to the present disclosure, the technical problems are solved by obtaining the difference between the actual outlet water temperature and the target outlet water temperature of the main pipe, obtaining the current operating states of the compressors of the modules, determining the target control strategy for the modules according to the difference and the current operating states, and controlling the modules to operate according to the target control strategies. The technical problems are that each of the modules in related arts is in an uneven load state for a long time, thus shortening the service life of the chilling unit, and that an unreasonable load distribution for some modules in the multi-module water chilling unit causes the energy efficiency of the compressors not to be high. The multiple modules are controlled according to the difference between the actual outlet water temperature and the target outlet water temperature of the main pipe and the states of the compressors, which enables each of the modules to be in a relatively even state point.

In some embodiments, obtaining the current operating states of the compressors of the modules is implemented in the manner of obtaining starting states of the compressors of the modules. Determining the target control strategy for the modules according to the difference and the current operating states includes: determining the number of un-started compressors according to the starting states, and determining the target control strategy for the modules according to the difference and the number of the un-started.

In some embodiments, according to the outlet water temperature of the main pipe and the current operating state of the unit, six operating modes are defined as follows:

Mode 1, an outlet water temperature difference $\Delta t_{total}$ of the main pipe is less than $\alpha$, and the number $N_C$ of un-started compressors is greater than 0;
Mode 2, the outlet water temperature difference $\Delta t_{total}$ of the main pipe is less than $\alpha$, and the number $N_C$ of the un-started compressors is equal to 0;
Mode 3, the outlet water temperature difference $\Delta t_{total}$ of the main pipe is greater than $\beta$, and the number $N_C$ of the un-started compressors is greater than 0;
Mode 4, the outlet water temperature difference $\Delta t_{total}$ of the main pipe is greater than $\beta$, and the number $N_C$ of the un-started compressors is equal to 0;

Mode 5, the outlet water temperature difference of the main pipe satisfies $\alpha \leq \Delta t_{total} \leq \beta$, and the number $N_c$ of the un-started compressors is greater than 0; and

Mode 6, the outlet water temperature difference of the main pipe satisfies $\alpha \leq \Delta t_{total} \leq \beta$, and the number $N_C$ of the un-started compressors is equal to 0.

Where, $\Delta t_{total}$ denotes the difference between the actual outlet water temperature and the target outlet water temperature when the unit is operating, and $\alpha$ and $\beta$ denote upper and lower limits of the outlet water temperature difference, respectively.

In some embodiments, determining the target control strategy for the modules according to the difference and the current operating states is implemented in the following manner: when the difference is less than a first temperature threshold and the number of the un-started compressors is greater than 0, obtain an average value of loads of the compressors of the modules, determine a first compressor that has a maximum load among loads greater than the average value, and reduce an operating frequency of the first compressor by a first target step, until a corresponding difference is greater than or equal to the first temperature threshold, or until the load of the first compressor is within a first load range, or until the first compressor has a minimum load among loads greater than the average value.

In some embodiments, further includes: when the load of the first compressor is within the first load range and when the corresponding difference is less than the first temperature threshold, recalculating the average value of the loads of the compressors of the modules, determining a second compressor that has a maximum load among loads greater than the recalculated average value and is among other compressors excluding the first compressor,, and reducing an operating frequency of the second compressor by the first target step until the corresponding difference is greater than or equal to the first temperature threshold, or until the load of the second compressor is within the first load range, or until the second compressor has a minimum load among loads greater than the recalculated average value.

In some embodiments, further includes: when the second compressor among the compressors has a minimum load among loads greater than the recalculated average value, and when the corresponding difference is less than the first temperature threshold, determining a third compressor in the modules which has a minimum load among loads less than the average value, and turning off the third compressor.

In some embodiments, further includes: recalculating the average value of the loads of the modules, determining a fourth compressor that has a minimum load among loads less than the recalculated average value and is among other compressors excluding the third compressor, and increasing an operating frequency of the fourth compressor by the first target step until the corresponding difference is greater than or equal to the first temperature threshold.

In some embodiments, determining the target control strategy for the modules according to the difference and the current operating states is further implemented in the following manner: when the difference is less than the first temperature threshold and the number of the un-started compressors is equal to 0, reduce frequencies of the compressors that have the loads greater than the average value of the loads of the compressors of the modules in a sequence from a large load to a small load, until

$$\frac{|X_{jmax} - X_{j\_ave}|}{X_{j\_ave}} - \frac{|X_{jmin} - X_{j\_ave}|}{X_{j\_ave}} \leq \psi_1$$

is satisfied, or until the last one of the compressors that have the loads greater than the average value is traversed. Where, $X_{jmax}$ denotes the maximum load after frequency reduction, $X_{j\text{-}ave}$ denotes an average load after the frequency reduction, $X_{jmin}$ denotes the minimum load after the frequency reduction, and $\psi_1$ denotes a first threshold.

In some embodiments, further includes: when the last one of the compressors that have the loads greater than the average value is traversed, and when the difference is less than the first temperature threshold, increasing frequencies of the compressors that have the loads lower than the average value of the loads of the modules by a second target step in a sequence from a small load to a large load, until

$$\frac{|X_{jmax} - X_{j\_ave}|}{X_{j\_ave}} - \frac{|X_{jmin} - X_{j\_ave}|}{X_{j\_ave}} \leq \psi_1$$

is satisfied.

In some embodiments, determining the target control strategy for the modules according to the difference and the current operating states is further implemented in the following manner: when the difference is greater than a second temperature threshold and the number of the un-started compressors is greater than 0, determining a fifth compressor that has the minimum load, and increasing a frequency of the fifth compressor by a third target step, until $|X_{jmin} - X_{j\_ave}| < \varphi$ is satisfied. Where, $X_{jmin}$ denotes the minimum load after the frequency increase, $X_{j\_ave}$ denotes an average load after the frequency increase, and $\varphi$ denotes a second threshold.

In some embodiments, further includes: starting the un-started compressors when all compressors that have the loads less than the average load satisfy $|X_{jmin} - X_{j\_ave}| < \varphi$ respectively.

In some embodiments, determining the target control strategy for the modules according to the difference and the current operating states is further implemented in the following manner: when the difference is greater than the second temperature threshold and the number of un-started compressors is equal to 0, reducing frequencies of the compressors that have loads lower than the average value of the loads of the compressors once in a sequence from a small load to a large load, until the difference is less than or equal to the second temperature threshold.

In some embodiments, determining the target control strategy for the modules according to the difference and the current operating state is further implemented in the following manner: when the difference is greater than or equal to the first temperature threshold and less than or equal to the second temperature threshold, and when the number of the un-started compressors is greater than or equal to 0, reducing a frequency of one compressor corresponding to the maximum load by a fourth target step, and increasing a frequency of another compressor corresponding to the minimum load by a fifth target step, until

$$\frac{|X_{jmax}-X_{j\_ave}|}{X_{j\_ave}} - \frac{|X_{jmin}-X_{j\_ave}|}{X_{j\_ave}} \leq \psi_2$$

is satisfied. Where, $X_{jmax}$ denotes the maximum load after the frequency adjustment, $X_{j\_ave}$ denotes the average load after the frequency adjustment, and $X_{jmin}$ denotes the minimum load after the frequency adjustment, and $\psi_2$ denotes a third threshold.

In the above embodiments, the operating modes are classified according to the difference between the actual outlet water temperature and the target outlet water temperature of the main pipe and the number of un-started compressors, and the concept of average load is introduced to allow each module to operate at a load as close to the average load as possible. Furthermore, turning on the un-started compressors or not is determined according to an accumulated operating time of the compressors, which may prolong the service life of the unit. By utilizing the operating characteristics of the compressors, and according to the characteristic that the compressors themselves have optimal operating load state points, the compressors of more modules are allowed to operate in the optimal operating load range while the load of each module is even. That is, it solves the problem that the life of the unit is shorted due to some modules of the multi-module chilling unit operating at a high load or at a low load for a long time based on the principle of evenly distributing the cooling capacity, and it also solves the problem that the energy efficiency of the compressor is not high enough due to the unreasonable load distribution for some modules in the multi-module chilling unit.

According to an embodiment of the present disclosure, a method for controlling a multi-module chilling unit is also provided. In this method, according to the outlet water temperature of the main pipe and the current operating states of the unit, six operating modes are defined as follows:

Mode 1, an outlet water temperature difference $\Delta t_{total}$ of the main pipe is less than $\alpha$, and the number $N_c$ of un-started compressors is greater than 0;
Mode 2, the outlet water temperature difference $\Delta t_{total}$ of the main pipe is less than $\alpha$, and the number $N_c$ of the un-started compressors is equal to 0;

Mode 3, the outlet water temperature difference $\Delta t_{total}$ of the main pipe is greater than $\beta$, and the number $N_C$ of the un-started compressors is greater than 0;
Mode 4, the outlet water temperature difference $\Delta t_{total}$ of the main pipe is greater than $\beta$, and the number $N_C$ of the un-started compressors is equal to 0;
Mode 5, the outlet water temperature difference of the main pipe satisfies $\alpha \leq \Delta t_{total} \leq \beta$, and the number $N_C$ of the un-started compressors is greater than 0; and
Mode 6, the outlet water temperature difference of the main pipe satisfies $\alpha \leq \Delta t_{total} \leq \beta$, and the number $N_c$ of the un-started compressors is equal to 0.

Where, $\Delta t_{total}$ denotes the difference between the actual outlet water temperature and the target outlet water temperature when the unit is operating, and $\alpha$ and $\beta$ denote upper and lower limits of the outlet water temperature difference, respectively.

Where, the operating states of the modules need to communicate with a display board. A faulty module is determined by a difference between the inlet and outlet water temperatures of each branch pipe. If the inlet and outlet water temperatures are the same, a corresponding module is determined to be the faulty module. The number $n$ of faulty modules is calculated through the display board. The total number of the modules is $N$, then the number of normal operating modules is $N - n$, and a cumulative operating time of the compressor of each module is recorded. In this embodiment, according to the actual water demand, the difference between the actual outlet water temperature and the target outlet water temperature of the main pipe satisfies $\Delta t_{total} = t_{so} - t_{mo}$ is recorded when the unit is operating, where $t_{so}$ denotes the actual outlet water temperature of the main pipe, and $t_{mo}$ denotes the target outlet water temperature of the main pipe, which is the same as the target outlet water temperature of each branch pipe. The upper and lower limits $\alpha$ and $\beta$ of the outlet water temperature difference are set (which may be set according to an actual application scenario, for example, -0.5°C and +0.5°C). In addition, an actual operating load $X_{ji}$ of each module and an actual operating load $X_{ci}$ of the compressor are calculated based on an actual cooling capacity of the unit and an actual operating frequency of the compressor. An average load $X_{j\_ave}$ of each module of the unit is calculated as $X_{j\_ave} = \frac{\sum_{i=1}^{N} X_{ji}}{N-n}$ . Where, the compressor has an optimal operating load point $X_{opt}$, which is related to the characteristics of the compressor and is determined based on a compressor operating performance curve which is experimentally measured. An optimal operating load range is determined to be $|X_{ci} - X_{opt}| < \delta$ (where $\delta$ may be set, for example, to be 0.2), and if the compressor load falls within the optimal operating load range, the performance coefficient of the compressor is largest.

Six operating modes are defined according to the outlet water temperature of the main pipe and the actual operating states of the unit. The load adjustment and loading/unloading control methods of the modules of the chilling unit are as follows.

In Mode 1, the outlet water temperature difference $\Delta t_{total}$ of the main pipe is less than $\alpha$, and the number $N_C$ of the un-started compressors is greater than 0. At this time, the actual outlet water temperature of the main pipe is relatively low, and a unit load is relatively high, and some modules are not turned on. First, the average load $X_{j\_ave}$ of the modules of the unit is calculated, the unit which has the maximum load $X_{jmax}$ satisfying $X_{ji} > X_{j\_ave}$ is searched, and then the compressor frequency of this corresponding module is reduced by a step $\gamma$. After the frequency is reduced, the loads of the compressors and the average load of the unit are recalculated. If the outlet water temperature of the main pipe still satisfies $\Delta t_{total} < \alpha$, the compressor frequency of the module firstly searched is further reduced by the step $\gamma$. If the load of this compressor is already in the optimal load range, the average load $X_{j\_ave}$ of the modules of the unit is recalculated, and the unit having the maximum load $X_{jmax}$ is researched. The module firstly searched is involved in the calculation of the average load, but not involved in the frequency reduction. If all the searched unit satisfying $X_{ji} > X_{j\_ave}$ still satisfy that the outlet water temperature difference of the main pipe satisfying $\Delta t_{total} < \alpha$, the loads need to be further reduced, and then the unit having the minimum load $X_{jmin}$ satisfying $X_{ji} < X_{j\_ave}$ is searched and then closed. The module having the minimum load $X_{jmin}$ is researched, and the compressor frequency of this module is increased by the step $\gamma$ each time until the outlet water temperature requirement is met. In some embodiments, since some compressors are not turned on, when the cumulative operating time of the compressor reaches a limit, the un-started compressors are turned on to replace the started compressors.

In Mode 2, the outlet water temperature difference $\Delta t_{total}$ of the main pipe is less than $\alpha$, and the number $N_C$ of the un-started compressors is equal to 0. At this time, all modules have been turned on, the actual outlet water temperature of the main pipe is relatively low, and the unit load is relatively high. At this time, the frequencies of compressors of the modules operating at high loads are reduced in turn. After the frequencies are reduced, if

$$\frac{|X_{jmax} - X_{j\_ave}|}{X_{j\_ave}} - \frac{|X_{jmin} - X_{j\_ave}|}{X_{j\_ave}} > \psi$$ is satisfied

(where $\psi$ may be set, for example, to be 30%, and the purpose of setting this value is mainly to average the load values of the modules), continue to reduce $X_{jmax}$. At this time, if the outlet water temperature is relatively low, $X_{jmin}$ is increased, and each time the compressor frequency of the module corresponding to $X_{jmin}$ is increased by the step $\gamma$ until the outlet water temperature requirement is

met. Then $X_{jmin}$ and $X_{jmin}$ are researched until

$$\frac{|X_{jmax} - X_{j\_ave}|}{X_{j\_ave}} - \frac{|X_{jmin} - X_{j\_ave}|}{X_{j\_ave}} \leq \psi$$ is satisfied.

In Mode 3, the outlet water temperature difference $\Delta t_{total}$ of the main pipe is greater than $\beta$, and the number $N_C$ of the un-started compressors is greater than 0. At this time, the actual outlet water temperature of the main pipe is high, and the unit load is relatively small, and some modules have not turned on yet, then the module corresponding to the minimum load $X_{jmin}$ is searched, and the compressor frequency of the module corresponding to $X_{jmin}$ is increased by the step $\gamma$ until the load of this module satisfies $|X_{jmin} - X_{j\_ave}| < \varphi$ (where $\varphi$ may be set, for example, to be 15%. This value is set to equilibrate the loads of compressors having relatively small loads, so that more compressors having relatively small loads may operate under better performance conditions). If the loads of all modules having loads less than the average load $X_{j\_ave}$ satisfies $|X_{jmin} - X_{j\_ave}| < \varphi$, then it is considered to turn on the compressors of those un-started modules. At this time, based on the cumulative operating time of the compressor, the compressors are control to be turned on starting from the compressor having the shortest cumulative running time. After the compressors are turned on, the frequencies of the compressors are increased in the same manner as the control method for the compressors of the modules having small loads.

In Mode 4, the outlet water temperature difference $\Delta t_{total}$ of the main pipe is greater than $\beta$, and the number $N_C$ of the un-started compressors is equal to 0. At this time, the actual outlet water temperature of the main pipe is relatively high, and the unit load is relatively small, and all modules are turned on. At this time, the frequencies of the compressor of the modules operating at low loads are increased in sequence. After increasing the frequencies each time, the load $X_{jmin}$ is researched, and therefore, the initial $X_{jmax}$ may increase, until the outlet water temperature requirement is met.

In Mode 5, the outlet water temperature difference of the main pipe satisfies $\alpha \leq \Delta t_{total} \leq \beta$, and the number $N_C$ of the un-started compressors is greater than 0. At this time, the outlet water temperature of the main pipe has met the requirements, while some modules are not turned on, but $X_{ope}$ has met the outlet water temperature requirements. At this time, the loads of the modules need to be even, and both the module with the maximum load $X_{jmax}$ and the module with the minimum load $X_{jmin}$ are needed to be adjusted. First, the frequency of the compressor of the module corresponding to the maximum load $X_{jmax}$ is reduced by the step $\gamma$ (at this time, the module whose compressor has already operated in the optimal load range is excluded). At this time, the outlet water temperature difference may satisfy $\Delta t_{total} > \beta$. At this time, the frequency of the compressor of the module corresponding to the minimum load $X_{jmin}$ is increased by the step $\gamma$ until

$$\left| \frac{|X_{jmax}-X_{j\_ave}|}{X_{j\_ave}} - \frac{|X_{jmin}-X_{j\_ave}|}{X_{j\_ave}} \right| \leq \psi$$

is satisfied. The un-started compressors are controlled by the cumulative operating times thereof. When a operating time of the started compressor reaches a limit, the compressor with the minimum cumulative operating time is turned on first, and then the compressor with more operating time is turned on.

In Mode 6, the outlet water temperature difference of the main pipe satisfies $\alpha \leq \Delta t_{total} \leq \beta$, and the number $N_C$ of the un-started compressors is equal to 0. At this time, the outlet water temperature of the main pipe has met the requirements, and all modules have been turned on and may be controlled according to Mode 5.

**In** this embodiment, the operating modes are classified according to the difference between the actual outlet water temperature and the target outlet water temperature of the main pipe and the number of un-started compressors, and multi-module controlling is performed according to different operating modes, so that each module may be in a relatively even state point. By introducing the concept of average load, each module is allowed to operate at a load as close to the average load as possible, Furthermore, turning on the un-started compressors or not is determined according to the accumulated operating time of the compressors, which may prolong the service life of the unit. By utilizing the operating characteristics of the compressors, and according to the characteristic that the compressors themselves have optimal operating load state points, the compressors of more modules are allowed to operate in the optimal operating load range while the load of each module is even, thereby improving the system operating performance.

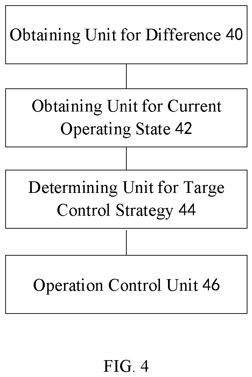

As shown in FIG. 4, in order to implement any one of the above methods, according to another aspect of the present disclosure, an apparatus for controlling a multi-module chilling unit is further provided. The multi-module chilling unit includes at least two modules, and each module is provided with a chilled-water inlet and a corresponding chilled-water outlet, and each of the modules is provided with a compressor, and chilled water output from each module is converged in the main pipe through a corresponding compressor, and the apparatus includes:

an obtaining unit for difference 40 configured to obtain a difference of an actual outlet water temperature and a target outlet water temperature of the main pipe;

an obtaining unit for current operating state 42 configured to obtain current operating states of the compressors of the modules;

a determining unit for targe control strategy 44 configured to determine a target control strategy for the modules according to the difference and the current operating states; and

an operation control unit 46 configured to control the modules to operate according to the target control strategy.

In the apparatus for controlling the multi-module chilling unit according to the present embodiment, the obtaining unit for difference 40 obtains the difference between the actual outlet water temperature and the target outlet water temperature of the main pipe, and the obtaining unit for current operating state 42 obtains the current operating states of the compressors of the modules, and the determining unit for targe control strategies 44 determines the target control strategy for the modules according to the difference and the current operating states, and the operation control unit 46 controls the modules to operate according to the target control strategies. The invention solves the technical problems that each of the modules in related arts is in an uneven load state for a long time, thus shortening the service life of the chilling unit, and that an unreasonable load distribution for some modules in the multi-module water chilling unit causes the energy efficiency of the compressors not to be high. The multiple modules are controlled according to the difference between the actual outlet water temperature and the target outlet water temperature of the main pipe and the states of the compressors, which enables each of the modules to be in a relatively even state point.

In some embodiments, the obtaining unit for current operating state is further configured to obtain starting states of the compressors of the modules. Determining the target control strategy for the modules according to the difference and the current operating states includes: determining the number of un-started compressors according to the starting states, and determining the target control strategy for the modules according to the difference and the number of the un-started.

In some embodiments, the determining unit for targe control strategy is further configured to: when the difference is less than a first temperature threshold and the number of the un-started compressors is greater than 0, obtain an average value of loads of the compressors of the modules, determine a first compressor that has a maximum load among loads greater than the average value, and reduce an operating frequency of the first compressor by a first target step, until a corresponding difference is greater than or equal to the first temperature threshold, or until the load of the first compressor is within a first load range, or until the first compressor has a minimum load among loads greater than the average value.

In some embodiments, the apparatus is further configured to: when the load of the first compressor is within the first load range and when the corresponding difference is less than the first temperature threshold, recalculate the average value of the loads of the compressors of the modules, determine a second compressor that has a maximum load among loads greater than the recalculated average value and is among other compressors excluding the first compressor, and reduce an operating frequency of the second compressor by the first target step until the corresponding difference is greater than or equal to the first temperature threshold, or until the load of the second compressor is within the first load range, or until the second compressor has a minimum load among loads greater than the recalculated average value.

In some embodiments, the apparatus is further configured to: when the second compressor becomes a compressor among the compressors, which has a minimum load among loads greater than the recalculated average value, and when the corresponding difference is less than the first temperature threshold, determine a third compressor in the modules that has a minimum load among loads less than the average value, and turn off the third compressor.

In some embodiments, the apparatus is further configured to: recalculate the average value of the loads of the compressors of the modules, and determine a fourth compressor that has a minimum load among loads less than the recalculated average value and is among other compressors excluding the third compressor, and increase an operating frequency of the fourth compressor by the first target step until the corresponding difference is greater than or equal to the first temperature threshold.

In some embodiments, the determining unit for targe control strategy is further configured to: when the difference is less than the first temperature threshold and the number of the un-started compressors is equal to 0, reduce frequencies of the compressors that have the loads greater than the average value of the loads of the modules in a sequence from a large load to a small load, until

$$\frac{|X_{jmax}-X_{j\_ave}|}{X_{j\_ave}} - \frac{|X_{jmin}-X_{j\_ave}|}{X_{j\_ave}} \leq \psi_1$$

is satisfied, or until the last one of the compressors that have the loads greater than the average value is traversed. Where, $X_{jmax}$ denotes the maximum load after frequency reduction, $X_{j\_ave}$ denotes an average load after the frequency reduction, $X_{jmin}$ denotes the minimum load after the frequency reduction, and $\psi_1$ denotes a first threshold.

In some embodiments, the apparatus is further configured to: when the last one of the compressors that have the loads greater than the average value is traversed, and when the difference is less than the first temperature threshold, increase frequencies of the compressors that have the loads lower than the average value of the loads of the modules by a second target step in a sequence from a small load to a large load, until

$$\frac{|X_{jmax}-X_{j\_ave}|}{X_{j\_ave}} - \frac{|X_{jmin}-X_{j\_ave}|}{X_{j\_ave}} \leq \psi_1$$

is satisfied.

In some embodiments, the determining unit for targe control strategy is further configured to: when the difference is greater than a second temperature threshold and the number of the un-started compressors is greater than 0, determine a fifth compressor that has the minimum load, and increase a frequency of the fifth compressor by a third target step, until $|X_{jmin} - X_{j\_ave}| < \varphi$ is satisfied. Where, $X_{jmin}$ denotes the minimum load after the frequency increase, $X_{j\_ave}$ denotes an average load after the frequency increase, and $\varphi$ denotes a second threshold.

In some embodiments, the apparatus is further configured to start the un-started compressors when all compressors that have the loads less than the average load satisfy $|X_{jmin} - X_{j\_ave}| < \varphi$ respectively.

In some embodiments, the determining unit for targe control strategy is further configured to: when the difference is greater than the second temperature threshold and the number of un-started compressors is equal to 0, reduce frequencies of the compressors that have loads lower than the average value of the loads of the compressors once in a sequence from a small load to a large load, until the difference is less than or equal to the second temperature threshold.

In some embodiments, the determining unit for targe control strategy is further configured to: when the difference is greater than or equal to the first temperature threshold and less than or equal to the second temperature threshold, and when the number of the un-started compressors is greater than or equal to 0, reduce a frequency of one compressor corresponding to the maximum load by a fourth target step, and increase a frequency of another compressor corresponding to the minimum load by a fifth target step, until

$$\frac{|X_{jmax}-X_{j\_ave}|}{X_{j\_ave}} - \frac{|X_{jmin}-X_{j\_ave}|}{X_{j\_ave}} \leq \psi_2$$

is satisfied. Where, $X_{jmax}$ denotes the maximum load after the frequency adjustment, $X_{j\_ave}$ denotes the average load after the frequency adjustment, and $X_{jmin}$ denotes the minimum load after the frequency adjustment, and $\psi_2$ denotes a third threshold.

The present disclosure also provides a computer-readable storage medium, which stores one or more programs. The one or more programs may be executed by one or more processors to implement the steps in any of the above control methods.

Of course, the person of ordinary skill in the art may understand that all or part of the processes in the above-mentioned method embodiments may be implemented by instructing related hardware (such as a processor, a controller, etc.) through a computer program. The program may be stored in a computer-readable storage medium, and the program, when executed, may include the processes of the above-mentioned method embodiments. The storage medium mentioned above may be a memory, a magnetic disk, an optical disk, etc.

The specific implementations of the present disclosure described above do not constitute a limitation on the protection scopes of the present disclosure. Any other corresponding changes and modifications made based on the technical concepts of the present disclosure should be included in the protection scopes of the claims of the present disclosure.

**Claims**

1. A method of controlling a multi-module water chilling unit, **characterized in that** the multi-module water chilling unit comprises at least two modules, each module is provided with a chilled-water inlet and a corresponding chilled-water outlet; each is provided with a compressor; and chilled water output from each module is converged in a main pipe through a corresponding compressor, wherein the method comprises:

   obtaining a difference between an actual outlet water temperature and a target outlet water temperature of the main pipe;
   obtaining current operating states of the compressors of the modules;
   determining a target control strategy for the modules according to the difference and the current operating states; and
   controlling the modules to operate according to the target control strategy.

2. The method according to claim 1, wherein

   obtaining the current operating states of the compressors of the modules comprises: obtaining starting states of the compressors of the modules;
   determining the target control strategy for the modules according to the difference and the current operating states comprises:

   determining the number of un-started compressors according to the starting states; and
   determining the target control strategy for the modules according to the difference and the number of the un-started.

3. The method according to claim 2, wherein determining the target control strategy for the modules according to the difference and the current operating states comprises:
   when the difference is less than a first temperature threshold and the number of the un-started compressors is greater than 0, obtaining an average value of loads of the compressors of the modules, and determining a first compressor that has a maximum load among loads greater than the average value, and reducing an operating frequency of the first compressor by a first target step, until a corresponding difference is greater than or equal to the first temperature threshold, or until the load of the first compressor is within a first load range, or until the first compressor has a minimum load among loads greater than the average value.

4. The method according to claim 3, wherein the method further comprises:
   when the corresponding difference is less than the first temperature threshold, and when the load of the first compressor is within the first load range, recalculating the average value of the loads of the compressors of the modules, and determining a second compressor that has a maximum load among loads greater than the recalculated average value and is among other compressors excluding the first compressor, and reducing an operating frequency of the second compressor by the first target step until the corresponding difference is greater than or equal to the first temperature threshold, or until the load of the second compressor is within the first load range, or until the second compressor has a minimum load among loads greater than the recalculated average value.

5. The method according to claim 4, wherein the method further comprises:
   when the second compressor among the compressors has a minimum load among loads greater than the recalculated average value, and when the corresponding difference is less than the first temperature threshold, determining a third compressor in the modules which has a minimum load among loads less than the average value, and shutting down the third compressor.

6. The method according to claim 5, wherein the method further comprises:
   recalculating the average value of the loads of the modules, determining a fourth compressor that has a minimum load among loads less than the recalculated average value and is among other compressors excluding the third compressor, and increasing an operating frequency of the fourth compressor by the first target step until the corresponding difference is greater than or equal to the first temperature threshold.

7. The method according to claim 2, wherein determining the target control strategy for the modules according to the difference and the current operating states comprises:
   when the difference is less than a first temperature threshold and the number of un-started compressors is equal to 0, reducing frequencies of the compressors that have loads greater than the average value of the loads of the modules in a sequence from a large load to a small load, until

$$\frac{|X_{jmax}-X_{j\_ave}|}{X_{j\_ave}} - \frac{|X_{jmin}-X_{j\_ave}|}{X_{j\_ave}} \leq \psi_1$$

is satisfied, or until the last one of the compressors that have the loads greater than the average value is traversed; wherein, $X_{jmax}$ denotes the maximum load after a frequency reduction, $X_{j\text{-}ave}$ denotes an average load after the frequency reduction, $X_{jmin}$ denotes the minimum load after frequency reduction, and $\psi_1$ denotes a first threshold.

8. The method according to claim 7, wherein the method further comprises:
   when the last one of the compressors that have the loads greater than the average value is traversed, and when the difference is less than the first temperature threshold, increasing frequencies of the compressors that have the loads lower than the average value of the loads of the modules by a second target step in a sequence from a small load to a large load, until

   $$\frac{|X_{jmax}-X_{j\_ave}|}{X_{j\_ave}} - \frac{|X_{jmin}-X_{j\_ave}|}{X_{j\_ave}} \leq \psi_1$$

   is satisfied.

9. The method according to claim 2, wherein determining the target control strategy for the modules according to the difference and the current operating states comprises:
   when the difference is greater than a second temperature threshold and the number of the un-started compressors is greater than 0, determining a fifth compressor having the minimum load, and increasing a frequency of the fifth compressor by a third target step, until $|X_{jmin} - X_{j\_ave}| < \varphi$ is satisfied; wherein, $X_{min}$ denotes the minimum load after a frequency increase, $X_{j\_ave}$ denotes an average load after the frequency increase, and $\varphi$ denotes a second threshold.

10. The method according to claim 9, wherein the method further comprises:
    starting the un-started compressors when all compressors having the loads less than the average load satisfy $|X_{jmin} - X_{j\_ave}| < \varphi$ respectively.

11. The method according to claim 2, wherein determining the target control strategy for the modules according to the difference and the current operating states comprises:
    when the difference is greater than a second temperature threshold and the number of un-started compressors is equal to 0, reducing frequencies of compressors having loads lower than an average value of loads of the compressors once in a sequence from a small load to a large load, until the difference is less than or equal to the second temperature threshold.

12. The method according to claim 2, wherein determining the target control strategy for the modules according to the difference and the current operating state comprises:
    when the difference is greater than or equal to a first temperature threshold and less than or equal to a second temperature threshold, and when the number of the un-started compressors is greater than or equal to 0, reducing a frequency of one compressor corresponding to the maximum load by a fourth target step, and increasing a frequency of another compressor corresponding to the minimum load by a fifth target step, until

    $$\frac{|X_{jmax}-X_{j\_ave}|}{X_{j\_ave}} - \frac{|X_{jmin}-X_{j\_ave}|}{X_{j\_ave}} \leq \psi_2$$

    is satisfied; wherein, $X_{jmax}$ denotes the maximum load after a frequency adjustment, $X_{j\_ave}$ denotes an average load after the frequency adjustment, $X_{jmin}$ denotes the minimum load after the frequency adjustment, and $\psi_2$ denotes a third threshold.

13. An apparatus for controlling a multi-module chilling unit, **characterized in that** the multi-module chilling unit comprises at least two modules, each module is provided with a chilled-water inlet and a corresponding chilled-water outlet; each module is provided with a compressor; and chilled water output from each module is converged in a main pipe through a corresponding compressor, and the apparatus comprises:

    an obtaining unit for difference configured to obtain a difference of an actual outlet water temperature and a target outlet water temperature of the main pipe;
    an obtaining unit for current operating state configured to obtain current operating states of the compressors of the modules;
    a determining unit for targe control strategy configured to determine a target control strategy for the modules according to the difference and the current operating states; and
    an operation control unit configured to control the modules to operate according to the target control strategy.

14. A computer-readable storage medium, having a computer program stored thereon, wherein, the computer program, when executed by a processor, forces the processor to perform steps of the method according to any one of claims 1 to 12.

Obtaining a difference between an actual outlet water temperature and a target outlet water temperature at the main pipe

S102

Obtaining current operating states of the compressors of the modules

S104

Determining a target control strategy for the modules according to the difference and the current operating states

S106

Controlling the modules to operate according to the target control strategy

S108

FIG. 1

FIG. 2

Chilled water output
from main pipe

Chilled-water outlet of Module 1

Module 1

Chilled-water inlet of Module 1

Chilled-water outlet of Module 1

Module 2

Chilled-water inlet of Module 1

Module 3

Chilled-water outlet of Module 1

Module N

Chilled-water inlet of Module 1

Chilled water entering main
pipe

FIG. 3

Obtaining Unit for Difference 40

Obtaining Unit for Current
Operating State 42

Determining Unit for Targe
Control Strategy 44

Operation Control Unit 46

FIG. 4

## INTERNATIONAL SEARCH REPORT

| International application No. |
|---|
| **PCT/CN2023/088294** |

**A.    CLASSIFICATION OF SUBJECT MATTER**

F25D 29/00(2006.01)i

According to International Patent Classification (IPC) or to both national classification and IPC

**B.    FIELDS SEARCHED**

Minimum documentation searched (classification system followed by classification symbols)

IPC: F24D, F24F,F25B, F25D, G05D

Documentation searched other than minimum documentation to the extent that such documents are included in the fields searched

Electronic data base consulted during the international search (name of data base and, where practicable, search terms used)

DWPI, CNABS, CNTXT, CJFD, GBTXT, CATXT, SGTXT, ATTXT, EPTXT, LEXTXT, USTXT, CHTXT, WOTXT: 格力, 多, 模块, 制冷, 控制, 负荷, 频率, 不均, 最大, 最小, 寿命, 温差, 平均值, 压缩机, 开启, 停止, 数量, 次序, large numbers of, module, refrigerat+, control, load, frequency, uneven, maximum, minimum, life, temperature difference, average, compressor, on, off, number, sequence

**C.    DOCUMENTS CONSIDERED TO BE RELEVANT**

| Category* | Citation of document, with indication, where appropriate, of the relevant passages | Relevant to claim No. |
|---|---|---|
| X | CN 103375878 A (SHANGHAI BAOSIGHT SOFTWARE CO., LTD.) 30 October 2013 (2013-10-30) <br>     description, paragraphs 0031-0049; and figure 1 | 1 ,2, 13, 14 |
| PX | CN 115355648 A (GREE ELECTRIC APPLIANCES, INC. OF ZHUHAI) 18 November 2022 (2022-11-18) <br>     claims 1-14 | 1-14 |
| A | CN 112880115 A (QINGDAO HAIER AIR CONDITIONER ELECTRONICS CO., LTD. et al.) 01 June 2021 (2021-06-01) <br>     entire document | 1-14 |
| A | CN 114183885 A (GREE ELECTRIC APPLIANCES, INC. OF ZHUHAI) 15 March 2022 (2022-03-15) <br>     entire document | 1-14 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 June 2023** | **30 June 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/088294**

### C. DOCUMENTS CONSIDERED TO BE RELEVANT

| Category* | Citation of document, with indication, where appropriate, of the relevant passages | Relevant to claim No. |
|---|---|---|
| A | CN 110094802 A (STATE GRID TIANJIN ELECTRIC POWER COMPANY ELECTRIC POWER RESEARCH INSTITUTE et al.) 06 August 2019 (2019-08-06) entire document | 1-14 |
| A | CN 110617546 A (WU ZHIJUN) 27 December 2019 (2019-12-27) entire document | 1-14 |
| A | JP 2006105554 A (MITSUBISHI ELECTRIC CORP. et al.) 20 April 2006 (2006-04-20) entire document | 1-14 |
| A | KR 20130120866 A (SK TELECOM CO., LTD,) 05 November 2013 (2013-11-05) entire document | 1-14 |

Form PCT/ISA/210 (second sheet) (July 2022)

**INTERNATIONAL SEARCH REPORT**
Information on patent family members

| International application No. |
| --- |
| **PCT/CN2023/088294** |

| Patent document cited in search report | | | Publication date (day/month/year) | Patent family member(s) | | | Publication date (day/month/year) |
| --- | --- | --- | --- | --- | --- | --- | --- |
| CN | 103375878 | A | 30 October 2013 | CN | 103375878 | B | 06 July 2016 |
| CN | 115355648 | A | 18 November 2022 | None | | | |
| CN | 112880115 | A | 01 June 2021 | CN | 112880115 | B | 20 May 2022 |
| CN | 114183885 | A | 15 March 2022 | CN | 114183885 | B | 11 November 2022 |
| CN | 110094802 | A | 06 August 2019 | CN | 110094802 | B | 18 May 2021 |
| CN | 110617546 | A | 27 December 2019 | None | | | |
| JP | 2006105554 | A | 20 April 2006 | JP | 4284262 | B2 | 24 June 2009 |
| KR | 20130120866 | A | 05 November 2013 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210835807